Europäisches Patentamt

European Patent Office

Office européen des brevets

(11) Veröffentlichungsnummer: **0 141 023**
**B1**

# EUROPÄISCHE PATENTSCHRIFT

(45) Veröffentlichungstag der Patentschrift:
24.08.88

(51) Int. Cl.⁴: **F 16 K 27/04,** F 16 K 3/02

(21) Anmeldenummer: 84106975.0

(22) Anmeldetag: 18.06.84

(54) Flachschieber.

(30) Priorität: 31.08.83 DE 3331350

(43) Veröffentlichungstag der Anmeldung:
15.05.85 Patentblatt 85/20

(45) Bekanntmachung des Hinweises auf die Patenterteilung:
24.08.88 Patentblatt 88/34

(84) Benannte Vertragsstaaten:
AT BE CH DE FR GB IT LI LU NL SE

(56) Entgegenhaltungen:
EP - A - 0 077 681
CH - A - 314 743
DE - A - 2 205 241
DE - A - 2 411 458
DE - A - 2 658 809
DE - A - 3 146 994
DE - B - 1 169 237
FR - A - 1 313 971
GB - A - 671 546
GB - A - 681 085
GB - A - 2 101 719
US - A - 2 663 538
US - A - 2 891 762
US - A - 4 009 727

(73) Patentinhaber: Erwin Burbach Maschinenfabrik GmbH,
Florastrasse 1, D-5276 Wiehl-Bielstein (DE)

(72) Erfinder: Althoff, Günther, In der Hofwiese 1,
D-5276 Wiehl (DE)

(74) Vertreter: Arentoft, Holger, Gartenstrasse 18,
D-5461 Kasbach-Ohlenberg (DE)

## Beschreibung

Die Erfindung ist auf einen Flachschieber bezogen, an welchem die Kanalrohre unmittelbar anflanschbar sind und dessen die Kanaldurchflussöffnung umgreifendes Gehäuse aus zwei aufeinander aufliegenden und mittels Verbindungsschrauben druckfest aneinander befestigten Gehäuseteilen zusammengesetzt ist, wobei an einem der Gehäuseteile eine Führungstasche für die zwischen den Gehäuseteilen bewegbare Schieberplatte ausgebildet ist, wobei die Abdichtung der Schieberplatte mittels einer Rundumdichtung und einer mit der Rundumdichtung korrespondierenden beidseitigen Querdichtung erfolgt, und wobei der Randbereich eines jeden Gehäuseteils eine verjüngte flanschartige Ausbildung aufweist, welche die Kanaldurchflussöffnung teilweise umgreift, sich vom Boden der Führungstasche auf beiden Seiten des Gehäuses bis zur Eintrittsöffnung der Führungstasche erstreckt und derart ausgestaltet ist, dass die beiden flanschartigen Ausbildungen bei zusammengeschraubtem Gehäuse voll aufeinander aufliegen.

In der Fachwelt galt bisher als Dogma, dass das Zusammenschrauben der beiden Gehäuseteile über Flanschen erfolgen müsste, die von dem Korpus eines jeden Gehäuseteils herausragte und derart angeordnet waren, dass nach dem Aufeinanderlegen der Gehäuseteile ein Spalt zwischen den jeweils einander paarweise zugeordneten Verschraubungsflanschen offen blieb, vgl. DE-A-2 205 241 und DE-A-2 411 458. Mit dieser Massnahme erstrebte man im Zuge des Zusammenschraubens eine gewisse Vorspannung zugunsten der Abdichtung.

Dieser Stand der Technik reichte bei den Druckerfordernissen der fünfziger und sechziger Jahre aus, um eine hinreichende Druckfestigkeit zu erzielen und mit relativ wenigen Flachschiebertypen pro Kanalrohrkaliber auszukommen. Insbesondere im letzten Jahrzehnt sind jedoch die Erfordernisse an Arbeitsdrücken drastisch gestiegen und damit zwangsläufig auch die Zahl der Flachschiebertypen. Schon bei einem Arbeitsdruck, der geringfügig höher ist als der jeweilige Nenndruck, verbiegen sich die Gehäuseteile und die Schieberplatte, indem die auseinanderliegenden Verbindungsflansche eine unerwünschte Hebelwirkung ausüben.

Wie aus Veröffentlichungen und Fachprospekten ersichtlich, blieb die Fachwelt auch unter dem Zwang der höheren Arbeitsdrücke bei ihrem bisher erfolgreichen Konzept der Vorspannung; sie reagierte lediglich mit Erhöhung der Materialstärke und damit, dass noch mehr Typen angeboten wurden. Das bisherige Prinzip des Zusammenschraubens unter Nutzung des zwischen der Verschraubungsflanschen befindlichen Vorspannungsspaltes erforderte eine hohe Steifigkeit insbesondere der Gehäuseteile, die daher entsprechend schwer und materialaufwendig gestaltet werden mussten. Der insbesondere bei geschlossener Schieberplatte entstehende Mediumsdruck war bestrebt, eben über die Vorspannungsspalten die Gehäuseteile und die Schieberplatte auseinanderzuheben. Besonders bedenklich war dabei das Auseinanderheben im Bereich der Querdichtung, weswegen man bemüht war, die Querdichtung möglichst nahe an den Kanaldurchgang anzuordnen. Der Druckfestigkeitsbereich des einzelnen Flachschiebertypus war für die heutigen Erfordernisse zu klein geworden. Es war daher bisher erforderlich, entweder, wie schon gesagt, mehrere Flachschieber für verschiedenen Druckstufen anzubieten, oder aber in Anlagen mit kleineren Arbeitsdrücken unwirtschaftlich schwere Flachschieber einzubauen. Der Kanalquerschnitt allein sagt bei den bisherigen Flachschiebern nichts über die Druckfestigkeit aus.

Aus der CH-A-314 743 ist ein Flachschieber bekannt, wobei die Gehäuseteile entweder über Verbindungsschrauben in Gehäusevorsprüngen zusammengeschraubt sind oder durch Aussengehäuse-Platten zusammengeklemmt werden.

Die vorliegende Erfindung hat zur Aufgabe, einen Flachschieber zu schaffen, der mit gleichem Kanaldurchmesser und gleicher Materialstärke in einem weiten Druckbereich einsetzbar ist und trotzdem aus optimal leichten Gehäuseteilen besteht. Durch die besondere Konstruktion des Flachschiebers soll vermieden werden, dass unter Einfluss des Mediumsdrucks Hebelwirkungen entstehen, die zu Verwerfungen und Verbiegungen der Gehäuseteile und der Schieberplatte führen könnten. Die Statik des Flachschiebergehäuses soll derart gestaltet sein, dass plötzliche Erhöhungen des Mediumsdrucks sie nicht beeinflussen können.

Zudem soll die Anzahl von Typen der einzelne Baureihe (des einzelnen Kanalrohrdurchschnitts) erheblich vermindert werden, erstens dadurch, dass der Druckfestigkeitsbereich des Flachschiebers drastisch erhöht wird, so dass der gleiche Flachschieber für ein breites Spektrum von Arbeitsdrucken einsetzbar ist, und zum anderen, indem das gleiche Flachschiebergehäuse bzw. die gleichen Gehäuseteile verschieden starke Schieberplatten aufnehmen können.

Schliesslich soll der Arbeitsaufwand bei der Montage und bei Reparaturen vermindert werden.

Diese Erfindungsaufgabe wird durch eine Kombination dreier Merkmale gelöst:

– die aufeinander aufliegenden, flanschartigen Ausbildungen sind mit Verbindungsbohrungen versehen, über welche das Gehäuse zusammengeschraubt ist,

– die gleichzeitig als Anschlussbohrungen dem Anschluss der anzuflanschenden Kanalrohre dienen,

– indem die Verbindungsschrauben für das Zusammenschrauben des Gehäuses und die Anschlussschrauben für das Anflanschen der Kanalrohre wechselweise aufeinander folgen.

Diese Verbindungs- und Anschlussbohrungen sind vorzugsweise in einem gemeinsamen Kreisbogen angeordnet, dessen Kreismittelpunkt sich in der Zentralachse der Kanaldurchflussöffnung befindet. Im Bereich der Eintrittsöffnung der Schieberplattentasche können die Gehäuseteile je eine aufschraubbare Verstärkung aufweisen.

Zwischen den Gehäuseteilen kann mindestens ein Zwischenteil eingefügt sein, der die gleiche Umfangskontur wie einer der Gehäuseteile aufweist und im Randbereich die gleichen Bohrungen besitzt, jedoch im Umfang der Schieberplattenführungstasche ausgeschnitten ist.

In einer weiteren Ausführungsform der Erfindung sind die Verbindungsschrauben und die Anschlussschrauben als Einheitsschrauben gestaltet, welche die gleiche Länge und den gleichen Durchmesser aufweisen und mittels Schraubenmuttern zunächst die Gehäuseteile miteinander verbinden, wonach die Kanalrohrflanschen aufgesteckt und mittels weiterer Muttern auf den Gehäuseteilen befestigt sind. An einer solchen Einheitsschraube kann ein dem Anfang des Zusammenschraubens der Gehäuseteile dienenden fixen Bolzenkopf fest angeordnet sein.

Für die Fachwelt stellt die Wirkung der Erfindung eine Überraschung dar. Durch die Anordnung aller Verbindungsschrauben des Gehäuses und der Befestigungsschrauben der Kanalflansche (bis auf zwei + zwei Gewindeschrauben im Mittelbereich) in einem aus zwei unmittelbar aufeinanderliegenden flanschartigen Ausbildungen gebildeten Randbereich der Gehäuseteile wird eine optimale Statik gestaltet, die keine Entstehung von Hebelwirkungen im Gehäusesystem erlaubt. Das praktische Ergebnis ist überraschend: bei gleichem Flachschiebertyp, gleicher Baulänge und gleichem Materialeinsatz erhöht sich die Druckfestigkeit um ein Dreifaches (herkömmlicher Flachschieber Typ 300, Schieberplattenstärke 10 mm Druckfestigkeit 3 bar, erfindungsgemässer Flachschieber gleicher Ausmasse und gleichen Materials Druckfestigkeit 10 bar).

Ein weiterer überraschender Vorteil besteht darin, dass die Druckfestigkeit vorrangig von der Stärke der Schieberplatte abhängt, da die Stabilität des Gehäuses durch die erfindungsgemässe Verschraubungsart auch ohne Erhöhung des Materialeinsatzes angepasst werden kann. Beispielsweise ergibt sich an einem erfindungsgemässen Flachschieber der vorhin angegebenen Masse bei Schieberplattenstärke 15 mm eine Druckfestigkeit von 15 bar.

Die Konsequenz ist, dass man mit einer einzigen Baureihe einem weiten Spektrum von Arbeitsdrücken gerecht wird. Bei stärkerer Schieberplatte braucht lediglich der mit der Schieberplattentasche ausgerüstete Gehäuseteil um denselben Wert verstärkt zu werden, mit dem die Schieberplattentasche tiefer gestaltet werden muss.

Anhand der Figuren wird in der Folge ein Ausführungsbeispiel der Erfindung dargestellt und erläutert. Es zeigen:

Figur 1 einen Flachschieber gemäss der Erfindung, in einer Frontansicht und teilweise im Schnitt, ohne Kanalanschluss und Verschraubung,

Figur 2 den Flachschieber Fig. 1 in einer Seitenansicht, mit angeflanschten Kanalrohren,

Figur 3 den Flachschieber Fig. 2 in einem Längsschnitt durch die Schieberplattenachse,

Figur 4 den mit einer wannenförmigen Führungstasche für die Aufnahme der Schieberplatte versehenen Gehäuseteil des Flachschiebers Fig. 1 und 3, in einer Draufsicht auf die Führungstasche,

Figur 5 den Schnitt X–X des Gehäuseteils Fig. 4,

Figur 6 den entsprechenden Schnitt des auf dem Gehäuseteil Fig. 4 aufliegenden zweiten Gehäuseteil,

Figur 7 den Längsschnitt Fig. 3, jedoch mit stärkerer Schieberplatte und mittels eines Compound-Zwischenteils verstärktem Gehäuseteil Fig. 5, ferner mit gesondert erstellten und angeschraubten Verstärkungen,

Figur 8 die Teilansicht eines Flachschiebers nach Fig. 1, jedoch mit seitlich angeflanschtem Antriebsgehäuse,

Figur 9 den Flachschieber Fig. 8 in einer Seitenansicht,

Figur 10 den Flachschieber Fig. 2 mit Einheitsschrauben sowohl zum Zusammenschrauben der Gehäuseteile als auch zur Befestigung der Kanalrohre, wobei das eine Kanalrohr abgeschraubt ist und

Figur 11 eine der auf Fig. 10 gezeigten Einheitsschrauben mit fest an ihr ausgebildeter Schraubenmutter; die Kanalrohrflansche, die Gehäuseteile und die losen Schraubenmuttern sind gestrichelt angedeutet (das Ganze im Verhältnis zu Fig. 10 etwas vergrössert).

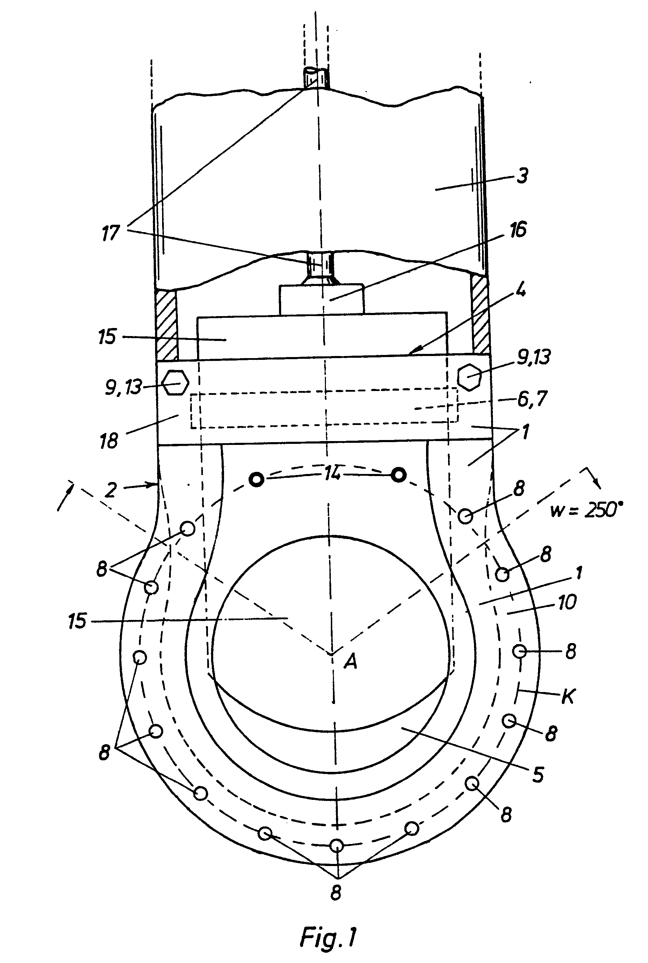

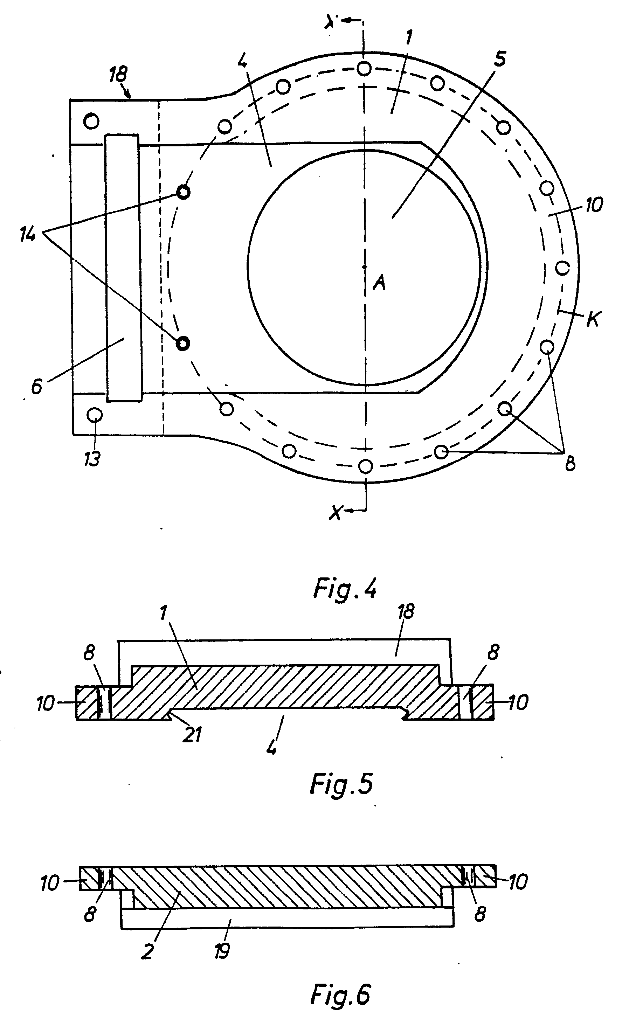

Der Flachschieber Fig. 1 ist aus zwei Gehäuseteile 1, 2 und einen auf diese aufsetzbaren Antriebsteil 3 zusammengefügt. Der Gehäuseteil 1 (Fig. 4 und 5) weist eine wannenförmige Ausnehmung 4 auf, die zusammen mit dem Gehäuseteil 2 eine Führungstasche 4 bildet, indem der Gehäuseteil 2 glatt auf dem Gehäuseteil 1 aufliegt. Beiden Gehäuseteilen 1, 2 ist eine kreisrunde Kanaldurchlassöffnung 5 gemeinsam. Figur 4 zeigt den Gehäuseteil 1 mit der Führungstasche 4 in einer Draufsicht. Der Gehäuseteil 2 ist bis auf die Führungstasche 4 dem Gehäuseteil 1 spiegelgleich. An jedem Gehäuseteil 1, 2 ist quer auf die Längsachse eine kastenförmige Ausnehmung 6 für die Querdichtung 7 ausgebildet.

Das Flachschiebergehäuse 1, 2 wird dadurch erstellt, dass man die Gehäuseteile 1, 2 aufeinanderlegen und anhand von Schraubenbohrungen 8 und Gehäuseschrauben 9 miteinander verschraubt. Die Auflage der Gehäuseteile 1, 2 aufeinander erfolgt über einen Randbereich 10 (Fig. 4), der sich konzentrisch um die Kanaldurchlassöffnung erstreckt.

Der Randbereich 10 ist teilweise flanschartig ausgebildet und die flanschartige Ausbildung gegenüber dem Korpus des jeweiligen Gehäuseteils entsprechend verjüngt. Die flanschartige Ausbildung erstreckt sich symmetrisch um die Zentralachse A der Kanaldurchflussöffnung 5, und zwar über einen in Richtung des Führungstaschenbodens 4 hin offenen Winkel w von mindestens 250° (Darstellung Fig. 1). Bei Einhaltung dieser Winkelbeschränkung ist ein Optimum an Druckfestigkeit gewährleistet; im Prinzip ist es möglich, den Winkel w noch grösser zu gestalten.

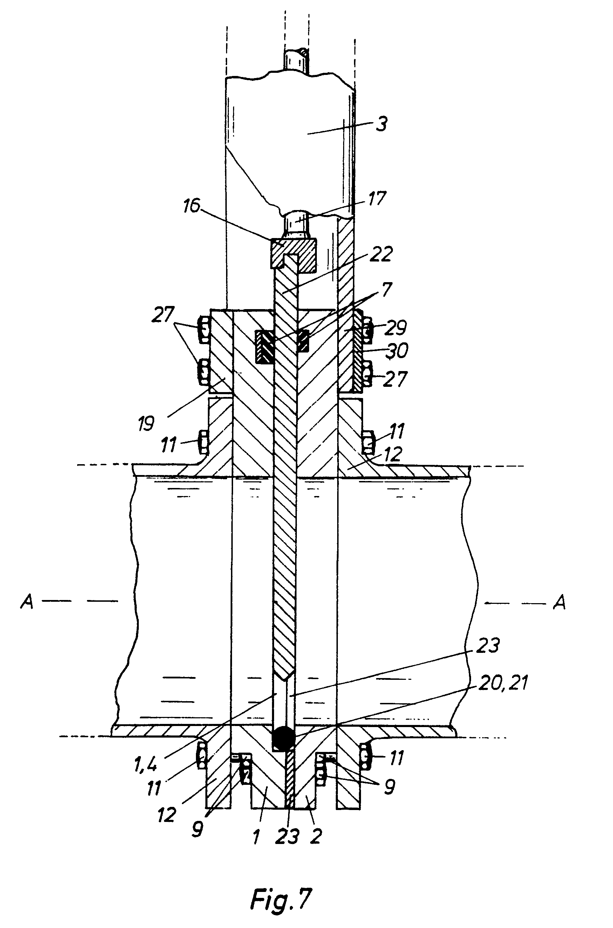

In dem Randbereich sind Bohrungen 8 für die Gehäuseschrauben 9 sowie für die Anschlussschrauben zur Anflanschung der Kanalrohre 12 (Fig. 7) eingearbeitet. Ausserhalb des Randbereichs 10 befinden sich Bohrungen 13 für weitere Gehäuseschrauben 9 und Gewindebohrungen 14 für die Anflanschung der Kanalrohre 12. Die Bohrungen 8, 14 sind auf einem Kreisbogen K angeordnet, dessen Kreismittelpunkt sich in der Zentralachse A befindet.

Beim Zusammenschrauben der Gehäuseteile 1, 2 bildet die wannenförmige Ausnehmung des Gehäuseteils 1 zusammen mit der glatten Fläche des Gehäuseteils 2 die Führungstasche 4 für die Schieberplatte 15, die im Antriebsteil 3 über eine Halterung 16 an einer Führungsstange 17 befestigt ist. Die Führungsstange kann wahlweise mit einem Elektroantrieb, mit einer Hydraulik oder mit einem Handspindel verbunden sein; dieser Antrieb gehört nicht zur Erfindung und wird dementsprechend nicht weiter beschrieben.

Im Bereich der Eintrittsöffnung der Führungstasche 4 weist jeder Gehäuseteil 1, 2 je eine Verstärkung 18, 19 (Fig. 5 und 6) auf, in deren Mitte die Ausnehmungen 6 für die Querdichtung 7 angeordnet sind. Die Querdichtung 7 ist mit einer Rundumdichtung 20 der Schieberplatte 15 verbunden, die sich in einer Rundumnut 21 der Führungstasche befindet.

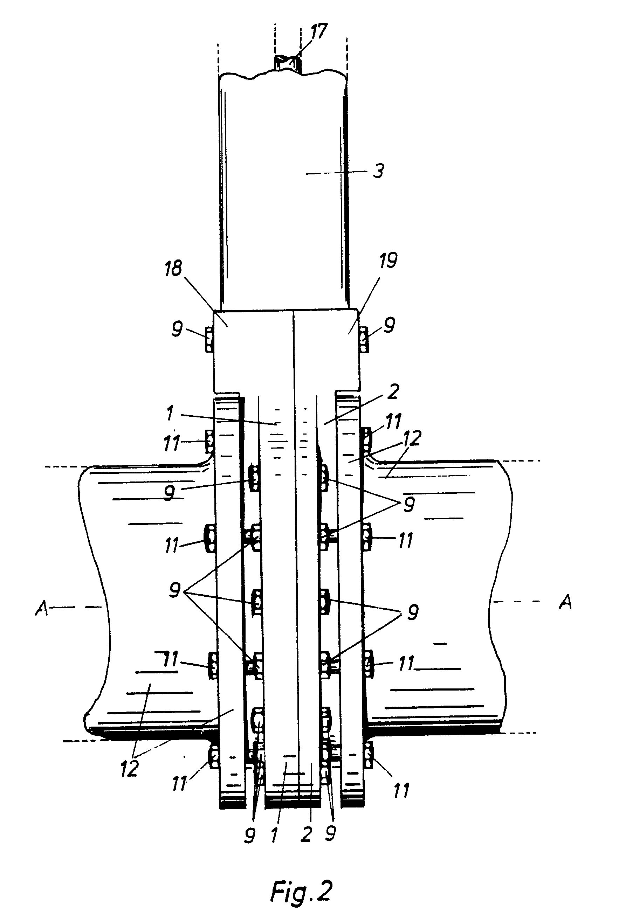

Nachdem das Flachschiebergehäuse 1, 2 zusammengeschraubt und der Antriebsteil 3 am Gehäuse 1, 2 befestigt ist (diese Befestigung ist nicht Gegenstand der Erfindung und wird daher lediglich im Zuge einer nachfolgenden Variante des Ausführungsbeispiels kurz beschrieben, vgl. Fig. 7, 8 und 9), erfolgt die Anflanschung der Kanalrohre 12, vgl. Figur 2. Die Darstellung Fig. 2 zeigt einwandfrei, dass das Zusammenfügen des Gehäuses 1, 2 und die Anflanschung der Kanalrohre 12 der Bildung von Hebelkräften keine Chance bieten. Statisch ist das Flachschiebergehäuse vollständig ausgeglichen. Hier liegt die Ursache zu der für die Fachwelt überraschende Erhöhung der Druckfestigkeit bei gleichem Materialeinsatz.

Das Prinzip der verjüngten Randbereiche 10 der Schiebergehäuseteile 1, 2 bringt, wie Fig. 2 zeigt, die Möglichkeit, jederzeit Schrauben nachzuziehen, ohne erst Gehäuseteile ausbauen zu müssen. Viele Reparaturen können ausgeführt werden, ohne den Betrieb stillzulegen. Ausserdem sparen die Verjüngungen Material und Gewicht.

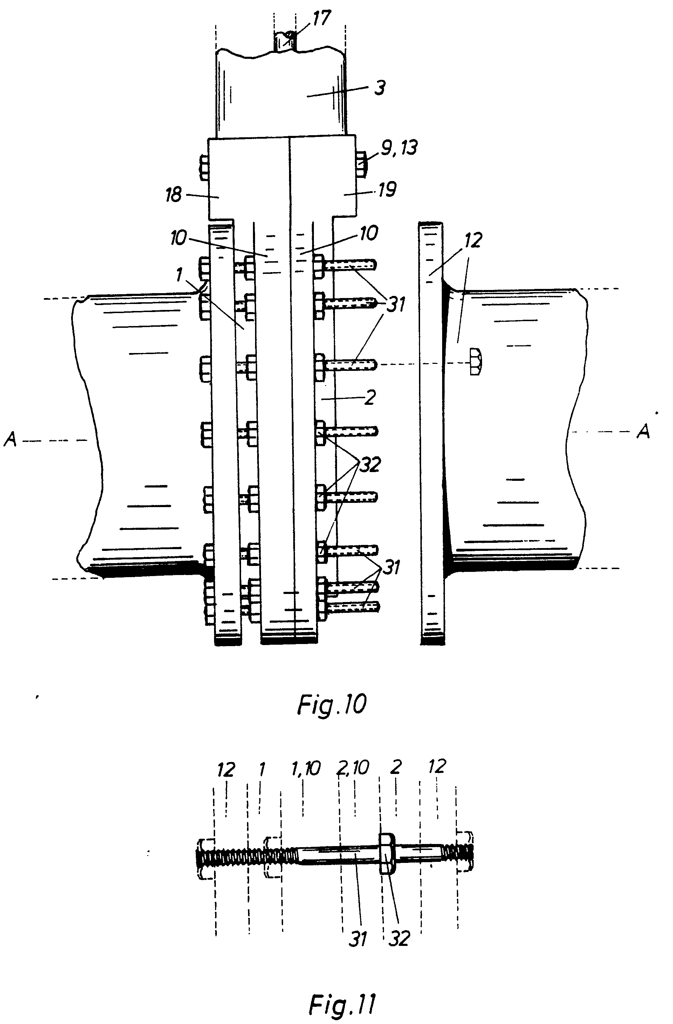

Wenn man, wie auf Fig. 2 gezeigt, an den Anschlussschrauben 11 beiderseits des Gehäuses Schraubenmuttern M aufschrauben und dadurch die Befestigung der Kanalrohrflansche 12 auch vom Gehäuse 1, 2 her absichert, ist es möglich, bei abgesperrtem Flachschieber wahlweise eines der Kanalrohre abzulösen, ohne den Betrieb der Gesamtanlage unterbrechen zu müssen, vgl. auch die Darstellung Fig. 10, die weiter unten ausführlich beschrieben wird. Die Vorteile für den Betrieb liegen auf der Hand.

Zu dem technischen Vorteil der bei gleichem Materialeinsatz drastisch erhöhten Druckfestigkeit tritt insbesondere bei den verjüngten Randbereichen 10 eine erhebliche Verkürzung der Montagezeit. Während bei einem 300 mm-Flachschieber herkömmlicher Konstruktion die Verschraubung aller Verbindungs- und Befestigungsschrauben 3 Arbeitsstunden beanspruchen, lässt sich die Verschraubung eines erfindungsgemässen 300 mm-Flachschiebers in einer Arbeitsstunde ausführen.

Die bereits vorhin erwähnte Tatsache, dass ein erfindungsgemässer Flachschieber eine dreimal so hohe Druckfestigkeit aufweist wie ein herkömmlicher Flachschieber gleichen Typs und gleicher Materialstärke, bringt einen weiteren Vorteil: ein Flachschieber gemäss der Erfindung, dessen Typ und Materialstärke einem herkömmlichen Flachschieber mit 3 bar Druckfestigkeit entspricht, kann unbedenklich für Arbeitsdrücke bis 10 bar verwendet werden, so dass man für Arbeitsdrücke bis 10 bar lediglich einen einzigen Flachschiebertyp auf Lager haben muss.

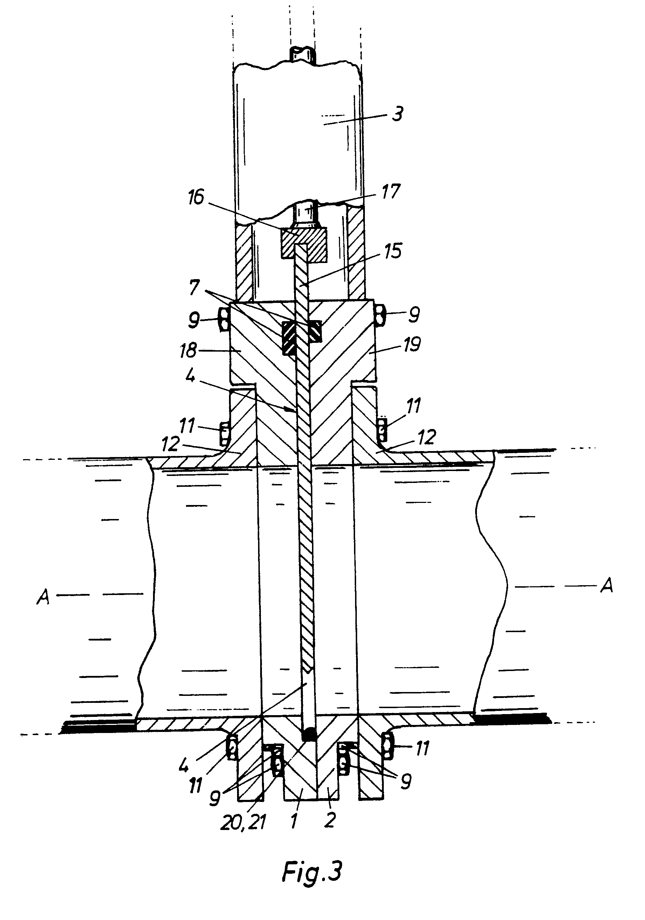

Das Erfindungsprinzip der hebelfreien Auflage der Gehäuseteile 1, 2 und der Kanalrohrflanschen 12 (vgl. Fig. 2) ermöglicht dazu noch eine weitere Vereinfachung der Bautypen und der Lagerhaltung. Fig. 7 zeigt den Schnitt eines Flachschiebers nach Fig. 2, jedoch mit einer um 50% stärkeren Schieberplatte 22. Durch die Schieberplatte 22 ist die Druckfestigkeit des Flachschiebers gegenüber dem Flachschieber Fig. 2 und 3 um mehr als 100% erhöht (Zahlenbeispiel: 300 mm-Flachschieber, 10 mm Schieberplatte, Druckfestigkeit 10 bar, 15 mm Schieberplatte Druckfestigkeit 23 bar).

Die Gehäuseteile 1, 2 sind dabei die gleichen geblieben; lediglich ist zwischen ihnen ein Zwischenteil 23 eingeklemmt, ein Blechteil mit der Kontur der Fig. 4, jedoch im Umfang der Schieberplattentasche 4 zuzüglich deren Rundumnut 21 ausgeschnitten. Ebenso ausgeschnitten sind die Einschnitte für die Querdichtung, soweit diese über den Umfang der Schieberplattentasche 4 hinausgehen, vgl. Fig. 4. Da die Stärke des Zwischenteils 23 der zusätzlichen Stärke der stärkeren Schieberplatte 22 entspricht, passt die stärkere Schieberplatte 22 in die durch den Zwischenteil 23 erweiterte Schieberplattentasche 4 hinein. Lediglich die Ausnehmung 6 an dem Gehäuseteil 1 ist um die Stärke des Zwischenteils 23 zu tief geworden; hier muss zu der Querdichtung 7 eine Ausgleichsleiste 24 aus Stahl od. dgl. hinzugefügt werden. Die Lage derjenigen Schieberplattenwand, die an dem glatten Gehäuseteil 2 anliegt, bleibt bei allen Schieberplatten die gleiche, ungeachtet deren unterschiedlichen Stärke.

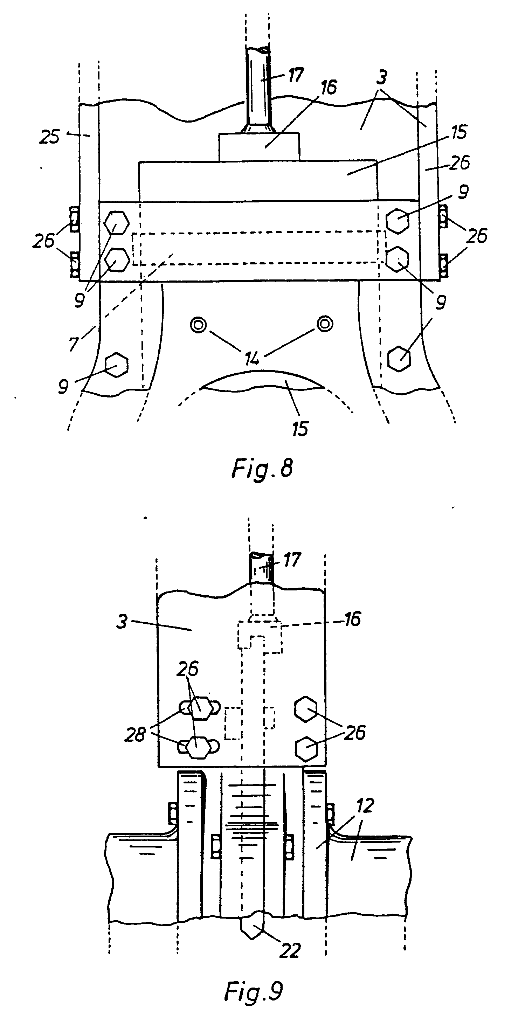

Aus dieser Darstellung geht hervor, dass man mit einer Reihe von zwei oder drei Schieberplatten verschiedener Stärke und einem der Stärkeunterschiede angepassten Zwischenteil 23 eine für die Praxis ausreichende Baureihe eines gegebenen Kanaldurchmessers mit einem und demselben Gehäuseteilpaar 1, 2 erstellen kann. Dabei muss man lediglich die Befestigung des Antriebsteil 3 beachten, weil durch die Einfügung eines oder mehrerer Zwischenteile 23 die Gesamtstärke des Schiebergehäuses 1, 2, 23 ändert. Auf den Figuren 8 und 9 ist ein Beispiel einer solchen Befestigung dargestellt. Das Gehäuse des Antriebsteils 3 greift mit zwei Flanschen 25, 26 über die Gehäuseteile 1, 2 und ihre Verstärkungen 18, 19 über und sind an diesen mittels Befestigungsschrauben befestigt. Wie auf Fig. 9 gezeigt, weist der über den Gehäuseteil 1 übergreifende Flansch 25 Langlöcher 28 auf, welche die durch das Einfügen von Zwischenteilen 23 verursachte Verschiebung auffangen.

Anstatt der Verstärkungen 18, 19 der Gehäuseteile 1, 2 einstückig mit dem jeweiligen Gehäuseteil auszubilden, kann man sie in der Gestalt gesonderter kastenförmiger Bausatzteile mit dem Gehäuseteil verschrauben, vgl. Fig. 7. Auch diese Massnahme bringt eine Vereinfachung der Herstellungs- und Lagerungsvorganges in Richtung Baukastenprinzip. Auf der Darstellung Fig. 7 greift das Gehäuse des Antriebsteils 3 mit einem Flansch 29 über den Gehäuseteil 2 über; der Flansch wirkt hier als Verstärkung 18, indem er durch eine Ergänzungsverstärkung 30 an dem Gehäuseteil 2 verschraubt wird.

Die Ausführungsform Fig. 10 zeigt eine konsequente Nutzung der von der Erfindung gebotenen technischen Möglichkeiten. Als Anschluss- und Verbindungsschrauben werden gleich lange Einheitsschrauben 31 verwendet, die mit Schraubenmuttern beiderseits der Gehäuseteile 1, 2 diese aneinander verschrauben und danach an beiden Seiten so weit herausragen, dass sie der Befestigung der Kanalrohrflanschen dienen. Um die Verschraubungsarbeit zu vereinfachen, kann man die Einheitsschraube 31 mit einer fixierten, an der entsprechenden Stelle der Einheitsschraube ausgebildeten Bolzenkopf 32 versehen, wie auf Fig. 11 dargestellt. Auf Fig. 11 ist die Lage der verschraubten Rohrflansche 12 und Gehäuseteile 1, 2 gestrichelt angedeutet.

Diese Ausführungsform macht es möglich, jederzeit, wie auch bei der Ausführung Fig. 2, ein Kanalrohr abzulösen und Reparaturen vorzunehmen, ohne den Mediumsdruck im System abstellen zu müssen. Die Ausführungsform Fig. 10 bringt darüber hinaus einen noch bedeutsameren Vorteil: durch die Halbierung der Abstände zwischen den Fixpunkten und die sich daraus ergebene Halbierung der Hebelarme, an welchen der Mediumsdruck bemüht ist, die Gehäusewände und die Kanalrohrflansche zu verformen, wird die statische Druckfestigkeit des Gehäuses mit Anflanschung um mindestens noch 20% erhöht.

Liste der Bezugsziffern

| | |
|---|---|
| 1 | Gehäuseteil mit Führungstasche 4 |
| 2 | Gehäuseteil glatt |
| 3 | Antriebsteil |
| 4 | Führungstasche am Gehäuseteil 1 |
| 5 | Kanaldurchflussöffnung an den Gehäuseteilen 1, 2 |
| 6 | kastenförmige Ausnehmung für die Querdichtung 7 |
| 7 | Querdichtungen |
| 8 | Schraubenbohrungen für das Zusammenschrauben der Gehäuseteile 1, 2 sowie für den Anschluss der Kanalrohre 12 |
| 9 | Verbindungsschrauben für Gehäuse |
| 10 | Randbereich, verjüngt und flanschartig ausgebildet |
| 11 | Anschlussschrauben für die Anflanschung der Kanalrohre 12 |
| 12 | Kanalrohr mit Flansch |
| 13 | Schraubenbohrungen für das Zusammenschrauben der Gehäuseteile 1, 2 ausserhalb des Randbereichs |
| 14 | Gewindebohrungen für das Anflanschen der Kanalrohre 12 |
| 15 | Schieberplatte |
| 16 | Halterung für die Schieberplatte 15 |
| 17 | Führungsstange für die Schieberplatte 15 |
| 18, 19 | Verstärkungen der Gehäuseteile 1, 2 |
| 20 | Rundumdichtung in der Rundnut 21 |
| 21 | Rundumnut an der Führungstasche 4 |
| 22 | stärkere Schieberplatte |
| 23 | Zwischenteil zur Verstärkung zwischen den Gehäuseteilen 1, 2 |
| 24 | Ausgleichsleiste für Querdichtung 7 |
| 25, 26 | Flansche des Antriebsteils 3 |
| 27 | Befestigungsschrauben der Flansche 25, 26 |
| 28 | Langlöcher am Flansch 25 |
| 29 | Längsflansch des Antriebsteil 3 |
| 30 | Ergänzungsverstärkung am Längsflansch 29 |
| 31 | Einheitsschrauben zur Verbindung der Gehäuseteile 1, 2 und Befestigung der Kanalrohre 12 |
| 32 | fixierter Bolzenkopf an der Einheitsschraube 31 |
| A | Zentralachse der Kanaldurchflussöffnung 31 |
| K | Kreisbogen der Verbindungs- und Anschlussbohrungen |

**Patentansprüche**

1. Flachschieber, an welchem die Kanalrohre (12) unmittelbar anflanschbar sind und dessen die Kanaldurchflussöffnung (5) umgreifendes Gehäuse (1, 2) aus zwei aufeinander aufliegenden und mittels Verbindungsschrauben (9) druckfest aneinander befestigten Gehäuseteilen (1, 2) zusammengesetzt ist, wobei an einem der Gehäuseteilen (1) eine Führungstasche (4) für die zwischen den Gehäuseteilen (1, 2) bewegbare Schieberplatte (15) ausgebildet ist, wobei die Abdichtung der Schieberplatte (15) mittels einer Rundumdichtung (20) und einer mit der Rundumdichtung korrespondierenden beidseitigen Querdichtung (7) erfolgt, und wobei der Randbereich (10) eines jeden Gehäuseteils (1, 2) eine verjüngte flanschartige Ausbildung (10) aufweist, welche die Kanaldurchflussöffnung (5) teilweise umgreift, sich vom Boden der Führungstasche (4) auf beiden Seiten des Gehäuses bis zur Eintrittsöffnung der Führungstasche (4) erstreckt und derart ausgestaltet ist, dass die beiden flanschartigen Ausbildungen (10) bei zusammengeschraubtem Gehäuse (1, 2) voll aufeinander aufliegen, gekennzeichnet durch eine Kombination der folgenden Merkmale:

(a) die aufeinander aufliegenden flanschartigen Ausbildungen (10) sind konzentrisch um die Achse (A) der Kanaldurchflussöffnung (5) mit Verbindungsbohrungen (8) versehen, über welche das Gehäuse (1, 2) zusammengeschraubt ist,

(b) wobei diese Verbindungsbohrungen (8) ausser dem Zusammenschrauben der Gehäuseteile (1, 2) gleichzeitig als Anschlussbohrungen (8) dem Anschluss der anzuflanschenden Kanalrohre (12) dienen,

(c) indem im Randbereich (10) die Verbindungsschrauben (9) für das Zusammenschrauben des Gehäuses (1, 2) und die Anschlussschrauben (11) für das Anflanschen der Kanalrohre (12) wechselweise aufeinander folgen.

2. Flachschieber nach Anspruch 1, dadurch gekennzeichnet, dass die Verbindungs- und Anschlussbohrungen (8) in einem gemeinsamen Kreisbogen (K) angeordnet sind, dessen Kreismittelpunkt sich in der Zentralachse (A) befindet.

3. Flachschieber nach Anspruch 1, dadurch gekennzeichnet, dass die Gehäuseteile (1, 2) im Bereich der Eintrittsöffnung der Schieberplattentasche (4) je eine aufschraubbare Verstärkung (18, 19) aufweisen.

4. Flachschieber nach Anspruch 1, dadurch gekennzeichnet, dass zwischen den Gehäuseteilen (1, 2) mindestens ein Zwischenteil (23) eingefügt ist, der die gleiche Umfangskontur wie einer der Gehäuseteile (1, 2) aufweist und im Randbereich (10) die gleichen Bohrungen (8) besitzt, jedoch im Umfang der Schieberplattenführungstasche (4) ausgeschnitten ist.

5. Flachschieber nach Anspruch 1, dadurch gekennzeichnet, dass die Verbindungsschrauben (9) für das Zusammenschrauben der Gehäuseteile (1, 2) und die Anschlussschrauben (11) für das Anflanschen der Kanalrohre (12) als Einheitsschrauben (31) die gleiche Länge und den gleichen Durchmesser aufweisen und mittels Schraubenmuttern zunächst die Gehäuseteile (1, 2) miteinander verbinden, wonach die Kanalrohrflanschen (12) aufgesteckt und mittels weiterer Muttern auf den Gehäuseteilen (1, 2) befestigt sind.

6. Flachschieber nach den Ansprüchen 1 und 5, dadurch gekennzeichnet, dass an einer solchen Einheitsschraube (31) ein dem Anfang des Zusammenschraubens der Gehäuseteile (1, 2) markierenden fixen Bolzenkopf (32) fest angeordnet ist.

**Claims**

1. A flat gate valve onto which the conduit pipes (12) are directly flange-mountable and its housing (1, 2) encompassing the conduit discharge outlet (5), and which is composed of two housing sections, one mounted on top of the other, and which are secured to each other so as to be pressureproof by means of connecting bolts (9). In one of the housing sections (1) a guide recess (4) has been arranged for the valve plate (15) which can be moved between the parts of the housing (1, 2). The sealing of the valve plate (15) is effected by means of an all-round seal (20) and a transverse seal (7), positioned on both sides and corresponding to the all-round seal. Round the periphery of each of the housing sections (1, 2) a tapering, flange-like structure (10) is positioned, which partially encompasses the conduit discharge outlet (5), and extends from the bottom of the guide recess (4) on both sides of the housing up to the entrance aperture of the guide recess (4), and is formed so as to allow the two flange-like structures (10) to be positioned one directly on top of the other when the sections of the housing (1, 2) are bolted together.

The flat gate valve is characterized by the following features:

(a) The flange-like structures (10), one positioned on top of the other, are equipped with connecting boreholes (8) arranged concentrically around the axis (A) of the conduit discharge outlet (5), and through which the housing sections (1, 2) are bolted together.

(b) These connecting boreholes (8), as well as serving to bolt the sections of the housing (1, 2) together, at the same time serve as flange boreholes (8) for connecting the conduit pipes (12) which are to be flange-mounted.

(c) This is made possible by the fact that, round the periphery (10), the connecting bolts (9) for bolting together the housing sections (1, 2) and the connecting bolts (11) for flange-mounting the conduit pipes (12) alternate with one another.

2. Flat gate valve in accordance with Claim 1, characterized by the fact that the connecting and flange boreholes (8) are arranged in a common circular arc (K), the centre of this circle being on the central axis (A).

3. Flat gate valve in accordance with Claim 1, characterized by the fact that each of the housing sections (1, 2) has a reinforcing plate (18, 19), provided with screw threads, in the vicinity of the entrance aperture of the valve plate recess (4).

4. Flat gate valve in accordance with Claim 1, characterized by the fact that, between the housing sections (1, 2), at least one intermediate part (23) is inserted which has the same shape and circumference as one of the housing sections (1, 2), and has the same boreholes (8) around its periphery (10), but is cut out in the dimensions of the slide valve guide recess (4).

5. Flat gate valve in accordance with Claim 1, characerized by the fact that the connecting bolts (9) for bolting together the sections of the housing (1, 2) and the connecting bolts (11) for the purpose of flange-mounting the conduit pipes (12), being standard bolts (31), are of the same length and the same diameter, and are primarily used for joining the sections of the housing (1, 2) to each other by means of nuts; following this, the conduit pipe flanges (12) are attached and fastened to the sections of the housing (1, 2) by means of further bolts.

6. Flat gate valve in accordance with Claims 1 and 5, characterized by the fact that one such standard bolt (31) is provided with a permanently-fixed bolt head (32), which marks the first point at which the bolting together of the housing sections (1, 2) is to begin.

## Revendications

1. Tiroir plat auquel on peut brider directement les canaux d'écoulement (12) et dont le boîtier (1, 2) enveloppant l'orifice d'entrée (5) est composé de deux parties disposées l'une sur l'autre (1, 2); elles sont assemblées pour résister à la pression par des vis de jonction (9), une cuvette de guidage (4) étant réalisée sur l'une des parties du boîtier (1) pour la plaque tiroir (15) mobile se trouvant entre les deux pièces du boîtier (1, 2), l'étanchéité de la plaque-tiroir (15) étant assurée par un joint circulaire (20) et un joint transversal (7) des deux côtés correspondant au joint circulaire et la zone du rebord (10) de chaque partie du boîtier (1, 2) ayant une configuration (10) effilée en forme de flasque qui enveloppe partiellement l'orifice d'écoulement (5) du canal et qui s'étend du fond de la cuvette de guidage (4) sur les deux côtés du boîtier jusqu'à l'orifice d'entrée de la cuvette de guidage (4) et faite de telle façon que les deux configurations (10) en forme de flasque soient bien superposées quand le boîtier (1, 2) est assemblé par vis, caractérisé par une combinaison des attributs suivants:

(a) les configurations (10) superposées en forme de flasques concentriques autour de l'axe (A) de l'orifice d'écoulement (5) sont munies d'alésages de jonction (8) par lesquels le boîtier (1, 2) est assemblé par vis,

(b) ces alésages de jonction (8), en plus de l'assemblage par vis des pièces du boîtier (1, 2) servent en même temps d'alésages de raccord (8) pour le raccordement des canaux d'écoulement (12) à brider,

(c) les vis de jonction (9) dans la zone de rebord (10) en vue de l'assemblage par vis du boîtier (1, 2) sont disposées en alternance avec les vis de raccord (11) pour le bridage des des canaux d'écoulement (12).

2. Tiroir plat correspondant à la revendication 1, caractérisé par le fait que les alésages de jonction et de raccord (8) sont disposés dans un arc de cercle commun (K) dont le centre se trouve sur l'axe central (A).

3. Tiroir plat correspondant à la revendication 1, caractérisé par le fait que chacune des parties du boîtier (1, 2) possède un renforcement à vis (18, 19) dans la zone de l'orifice d'entrée de la cuvette de la plaque tiroir (4).

4. Tiroir plat correspondant à la revendication 1, caractérisé par le fait qu'au moins une pièce intermédiaire (23) est insérée entre les parties du boîtier (1, 2) et qui aura le même contour périphérique qu'une des parties du boîtier (1, 2) avec les mêmes alésages (8) dans la zone de rebord (10), mais, qui cependant soit découpée dans la zone de la cuvette de guidage de la plaque tiroir (4).

5. Tiroir plat correspondant à la revendication 1, caractérisé par le fait que les vis de jonction (9) pour l'assemblage par vis des pièces du boîtier (1, 2) et celles de raccord (11) pour le bridage des canaux d'écoulement (12) aient la même longueur et le même diamètre en tant que vis (31) et qui relient d'abord les pièces du boîtier (1, 2) par des écrous, après quoi les flasques des canaux d'écoulement (12) y sont installées et fixées sur les pièces du boîtier (1, 2) par d'autres écrous.

6. Tiroir plat correspondant aux revendications 1 et 5, caractérisé par le fait que sur l'une de ces vis d'unité (31) une tête fixe de boulon (32) après repérage est installée au début de l'assemblage des pièces du boîtier (1, 2).

Fig.1

Fig.2

Fig.3

Fig. 4

Fig.5

Fig.6

15

Fig.7

Fig. 8

Fig.9

Fig.10

Fig.11

21